(19) Europäisches Patentamt / European Patent Office / Office européen des brevets

(11) **EP 4 549 395 A1**

(12) **EUROPEAN PATENT APPLICATION**

(43) Date of publication:
**07.05.2025 Bulletin 2025/19**

(21) Application number: **24208137.0**

(22) Date of filing: **22.10.2024**

(51) International Patent Classification (IPC):
**C01G 53/04** (2025.01)    **C01G 53/42** (2025.01)
**H01M 4/505** (2010.01)    **H01M 4/525** (2010.01)

(52) Cooperative Patent Classification (CPC):
**C01G 53/04; C01G 53/42; H01M 4/505;**
**H01M 4/525;** C01P 2002/52; C01P 2002/54;
C01P 2002/76; C01P 2004/03; C01P 2004/45;
C01P 2004/51; C01P 2004/53; C01P 2004/61;
C01P 2006/40; H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **30.10.2023  KR 20230147123**

(71) Applicant: **ECOPRO BM CO., LTD.**
**Cheongju-si, Chungcheongbuk-do 28117 (KR)**

(72) Inventors:
 • **KIM, Sang Hyeok**
  **Cheongju-si, Chungcheongbuk-do 28116 (KR)**
 • **SHIN, Jong Seung**
  **Cheongju-si, Chungcheongbuk-do 28116 (KR)**
 • **BAE, Jin Ho**
  **Cheongju-si, Chungcheongbuk-do 28116 (KR)**
 • **LEE, Hye Rim**
  **Cheongju-si, Chungcheongbuk-do 28116 (KR)**
 • **KIM, Jin Kyu**
  **Cheongju-si, Chungcheongbuk-do 28116 (KR)**
 • **SHIN, Jae Hoon**
  **Cheongju-si, Chungcheongbuk-do 28116 (KR)**

(74) Representative: **Vossius & Partner**
**Patentanwälte Rechtsanwälte mbB**
**Siebertstrasse 3**
**81675 München (DE)**

(54)    **CATHODE ACTIVE MATERIAL PRECURSOR AND CATHODE ACTIVE MATERIAL FOR SECONDARY BATTERIES**

(57)    A positive electrode active material precursor according to one aspect of the present invention may be a precursor including a plurality of hydroxide particles, and may satisfy relational expression 1 below in an XRD pattern obtained through Rietveld fitting as a result of X-ray diffraction (XRD) analysis using a CuK$\alpha$ ray:

$$[\text{Relational Expression 1}]\ 0.82 \le \text{FWHM}_{(102)} \le 1.22,$$

wherein a positive electrode active material precursor according to one aspect of the present invention may be also a precursor including a plurality of oxide particles, and may satisfy relational expression 2 below in an XRD pattern obtained through Rietveld fitting as a result of X-ray diffraction (XRD) analysis using a CuK$\alpha$ ray:

$$[\text{Relational Expression 2}]\ 127 \le \text{XRD peak Integral breadth}/4\tan\theta \le 137,$$

wherein, in above relational expression 1, said FWHM$_{(102)}$ means a full width at half maximum (FWHM(deg., $2\theta$)) of a (102) plane at an XRD peak defined by a hexagonal lattice having a R-3m space group, and in above relational expression 2, XRD peak Integral breadth is a value obtained by dividing an "area of the XRD peak" by a "height of the XRD peak," and $\theta$ is a Bragg angle of the corresponding peak.

EP 4 549 395 A1

**Description**

**Technical Field**

The present invention relates to a positive electrode active material precursor for a secondary battery and a positive electrode active material prepared therefrom, in which the positive electrode active material precursor relates to a precursor in a hydroxide form and a precursor in an oxide form.

**Background**

With the development of portable mobile electronic devices such as smart phones, MP3 players, and tablet PCs, there has been an explosively increasing demand for secondary batteries capable of storing electrical energy. In particular, with the advent of electric vehicles, mid- to large-sized energy storage systems, and portable devices requiring a high energy density, there has been an increasing demand for lithium secondary batteries.

As a lithium composite oxide included in a positive electrode active material, the most popular substance in recent years is a lithium nickel manganese cobalt oxide, $Li(Ni_xCo_yMn_z)O_2$ (in which the x, y, and z are atomic fractions of independent oxide composition elements, respectively, and are $0<x\leq1$, $0<y\leq1$, $0<z\leq1$, and $0<x+y+z\leq1$). This substance for the positive electrode active material has an advantage of producing high capacity because the substance is used at a voltage higher than that of $LiCoO_2$, which has been actively studied and used as the positive electrode active material, and has an advantage of a low price because a Co content is relatively low.

However, this lithium composite oxide is subject to a volume change according to intercalation and deintercalation of lithium ions during charging and discharging. There is a problem in that the volume of primary particles of the lithium composite oxide rapidly changes during charging and discharging, cracks occur in secondary particles according to repeated charging and discharging, or a crystal structure is subject to collapse or phase transition.

In order to compensate for these disadvantages, there has been a newly emerging demand for a high nickel-based positive electrode active material, which is a Ni-rich system having a nickel (Ni) content of 50 mol% or more based on the total content of transition metals excluding lithium (Li) as a positive electrode active material for a secondary battery.

However, the positive electrode active material of this Ni-rich system has an advantage of high energy density, but as the Ni content increases, there is a problem in that lifespan properties at room temperature and high temperature are rapidly deteriorated due to an increase in structural instability by Li/Ni cation mixing, a physical disconnection of internal particles by microcrack, deepening of electrolyte depletion, and the like.

**Detailed Description of the Invention**

**Technical Problem**

The present invention is intended to control physical properties of a positive electrode active material precursor particle, thereby controlling physical properties of a positive electrode active material prepared therefrom, and apply the positive electrode active material thereof to a secondary battery, so as to improve lifespan properties.

**Technical Solution**

A positive electrode active material precursor according to one aspect of the present invention may be a precursor including a plurality of hydroxide particles, and may satisfy relational expression 1 below in an XRD pattern obtained through Rietveld fitting as a result of X-ray diffraction (XRD) analysis using a CuKα ray.

$$[\text{Relational Expression 1}]\ 0.82 \leq \text{FWHM}_{(102)} \leq 1.22.$$

$_{(102)} \leq 1.22.$

In above relational expression 1, said $\text{FWHM}_{(102)}$ may mean a full width at half maximum (FWHM(deg., 2θ)) of a (102) plane at an XRD peak defined by a hexagonal lattice having a R-3m space group.

In addition, a positive electrode active material precursor according to one aspect of the present invention may be a precursor including a plurality of oxide particles, and may satisfy relational expression 2 below in an XRD pattern obtained through Rietveld fitting as a result of X-ray diffraction (XRD) analysis using a CuKα ray.

$$[\text{Relational Expression 2}]\ 127 \leq \text{XRD peak Integral breadth}/4\tan\theta \leq 137.$$

In above relational expression 2, XRD peak Integral breadth may be a value obtained by dividing an "area of the XRD peak" by a "height of the XRD peak," and θ may be a Bragg angle of the corresponding peak.

In one aspect, the particle included in the positive electrode active material may be a first particle having an average particle diameter (D50) of 8 μm or more, and the positive electrode active material may further include a second particle having an average particle diameter (D50) of 7 μm or less.

In one aspect, the positive electrode active material precursor including the oxide particle may be prepared from the positive electrode active material precursor including the hydroxide particle.

In one aspect, an average porosity A of the positive electrode active material particle included in the positive electrode active material may be 5%≤A≤7%.

In one aspect, the positive electrode active material particle included in the positive electrode active material may be a first particle having an average particle diameter (D50) of 8 μm or more, and the positive electrode active material may further include a second particle having an average particle diameter (D50) of 7 μm or less.

In one aspect, the positive electrode active material particle included in the positive electrode active material may include a coating oxide occupying at least a portion of at least one of a surface of a secondary particle or a grain boundary between primary particles and a surface of the primary particle.

A positive electrode according to one aspect of the present invention may include the positive electrode active material.

A secondary battery according to one aspect of the present invention may include the positive electrode active material.

**Advantageous Effects**

The present invention can have one effect of controlling physical properties of a positive electrode active material precursor particle, so as to control physical properties of a positive electrode active material prepared therefrom, and apply the positive electrode active material thereof to a secondary battery, thereby improving lifespan properties.

**Brief Description of the Drawings**

FIG. 1 is a sectional SEM image of a positive electrode active material according to an example and comparative examples of the present invention.

FIG. 2 is a result of measuring a particle strength of an oxide precursor according to an example and comparative examples of the present invention.

FIG. 3 is a result of measuring a rate of change in an average particle diameter (D50) after pressurization of an oxide precursor according to an example and comparative examples of the present invention.

**Mode for Invention**

As used herein, expressions such as "including" may need to be understood as openended terms which imply the possibility of including other components.

As used herein, "preferred" and "preferably" may refer to embodiments of the present invention which may provide specific advantages under specific circumstances. However, they are not intended to exclude other embodiments from the scope of the present invention.

In addition, the singular form used in the specification and the appended claims may be intended to include a plural form unless otherwise indicated in the context.

Meanwhile, technical features described below relate to one aspect of achieving the desired effect of the present invention as described above.

In other words, a positive electrode active material precursor particle and a positive electrode active material particle according to one aspect of the present invention may include technical features according to one aspect described below, and thus may remarkably improve battery properties when applied to a secondary battery.

The present invention relates to a positive electrode active material precursor and a positive electrode active material for a secondary battery, and the secondary battery of the present invention is not limited in the kind thereof as long as it is a battery which converts external electric energy into a form of chemical energy and stores the chemical energy to be reused. As one more preferred example, the present invention may relate to a positive electrode active material precursor and a positive electrode active material for a lithium ion secondary battery.

First, the positive electrode active material precursor of the present invention will be described.

Meanwhile, in the present specification, the positive electrode active material precursor including a plurality of hydroxide particles may be named a "hydroxide precursor," and the positive electrode active material precursor including the plurality of oxide particles may be named an "oxide precursor."

A positive electrode active material precursor according to one aspect of the present invention may be a precursor including a plurality of hydroxide particles, and may satisfy relational expression 1 below in an XRD pattern obtained through Rietveld fitting as a result of X-ray diffraction (XRD) analysis using a CuKα ray.

$$[\text{Relational Expression 1}] \quad 0.82 \leq FWHM_{(102)} \leq 1.22.$$

In above relational expression 1, said $FWHM_{(102)}$ may mean a full width at half maximum (FWHM(deg., 2θ)) of a (102) plane at an XRD peak defined by a hexagonal lattice having a R-3m space group.

In the present invention, upon XRD analysis, the FWHM value causes a deviation and an error due to various variables such as a condition of analysis equipment, an X-ray source, measurement conditions, etc., and thus corrected with the FWHM of corundum disc as a standard sample.

In the present invention, the corundum disc used herein was the corundum disc of the NIST.

For X-ray diffraction (XRD) analysis in the present invention, a step size (°/step) was measured at 0.01°/step, and a measurement time per step was measured at 0.05 s/step by using a Bruker D8 Advance diffractometer using CuKα radiation (1.540598Å).

In one aspect, the $FWHM_{(102)}$ may be 0.9 or more, or 1.1 or less in above rational expression 1.

In one aspect, the hydroxide particle may include nickel (Ni).

In one aspect, the hydroxide particle may further include any one or more selected from cobalt (Co), aluminum (Al), and manganese (Mn).

In one aspect, the hydroxide particle may be represented by formula 1 below.

$$[\text{Formula 1}] \qquad Ni_xCo_yM_{1-x-y}(OH)_2$$

In above formula 1, M may be selected from the group consisting of Zr, Mn, Al, B, Ba, Ce, Cr, F, Mg, V, Ti, Fe, Zn, Si, Y, Nb, Ga, Sn, Mo, W, P, Sr, and a combination thereof, and may be $0.5 \leq x \leq 1.0$, $0.0 \leq y \leq 0.4$, or $0.0 \leq 1-x-y \leq 0.4$.

In one aspect, the hydroxide particle may be represented by formula 1-1 below.

$$[\text{Formula 1-1}] \qquad Ni_{x'}Co_{y'}M1_{z'}M2_{1-x'-y'-z'}(OH)_2$$

In above formula 1-1, M1 may be Al or Mn, M2 may be selected from the group consisting of Zr, B, Ba, Ce, Cr, F, Mg, V, Ti, Fe, Zn, Si, Y, Nb, Ga, Sn, Mo, W, P, Sr, and a combination thereof, and may be $0.5 \leq x' \leq 1.0$, $0.0 \leq y' \leq 0.4$, $0.0 \leq z' \leq 0.4$, or $0.0 \leq 1-x'-y'-z' \leq 0.4$.

In one aspect, in above formula 1 and/or formula 1-1, x and/or x', which means a mol% of nickel (Ni) based on a mol% of all transition metals, may be 0.5 or more, 0.6 or more, 0.7 or more, 0.8 or more, or 0.9 or more. In particular, x and/or x' may be a high nickel-based hydroxide which is 0.8 or more, or 0.9 or more.

In one aspect, in above formula 1 and/or formula 1-1, y and/or y', which means a mol% of cobalt (Co) based on a mol% of all transition metals, may be 0.4 or less, 0.3 or less, 0.2 or less, or 0.1 or less.

A positive electrode active material precursor according to one aspect of the present invention may be a precursor including a plurality of oxide particles, and may satisfy relational expression 2 below in an XRD pattern obtained through Rietveld fitting as a result of X-ray diffraction (XRD) analysis using a CuKα ray.

$$[\text{Relational Expression 2}] \quad 127 \leq XRD \text{ peak Integral breadth } /4\tan\theta \leq 137.$$

In above relational expression 2, XRD peak Integral breadth may be a value obtained by dividing an "area of the XRD peak" by a "height of the XRD peak."

In above relational expression 2, since a value of "XRD peak Integral breadth/4tanθ" is derived as a unique value of the corresponding sample, it does not matter whether any peak for any plane of the corresponding sample is selected and measured. As one example, the value of "XRD peak Integral breadth/4tanθ" may be a value measured at a peak for a (200) plane.

The "area of the XRD peak" and the "height of the XRD peak" may refer to values obtained by performing a correction with a background subtracted, and the background correction thereof may be carried out by a commonly performed method.

Said θ may be a Bragg angle of the corresponding peak.

In one aspect, the "XRD peak Integral breadth/4tanθ" may be 129 or more, or 135 or less in above rational expression 2.

In one aspect, the oxide particle may include nickel (Ni).

In one aspect, the oxide particle may further include any one or more selected from cobalt (Co), aluminum (Al), and manganese (Mn).

In one aspect, the oxide particle may be represented by formula 2 below.

[Formula 2]  $Ni_xCo_yM_{1-x-y}O_2$

In above formula 2, M may be selected from the group consisting of Zr, Mn, Al, B, Ba, Ce, Cr, F, Mg, V, Ti, Fe, Zn, Si, Y, Nb, Ga, Sn, Mo, W, P, Sr, and a combination thereof, and may be $0.5 \leq x \leq 1.0$, $0.0 \leq y \leq 0.4$, or $0.0 \leq 1-x-y \leq 0.4$.

In one aspect, the oxide particle may be represented by formula 2-1 below.

[Formula 2-1]  $Ni_{x'}Co_{y'}M1_{z'}M2_{1-x'-y'-z'}O_2$

In above formula 2-1, M1 may be Al or Mn, M2 may be selected from the group consisting of Zr, B, Ba, Ce, Cr, F, Mg, V, Ti, Fe, Zn, Si, Y, Nb, Ga, Sn, Mo, W, P, Sr, and a combination thereof, and may be $0.5 \leq x' \leq 1.0$, $0.0 \leq y' \leq 0.4$, $0.0 \leq z' \leq 0.4$, or $0.0 \leq 1-x'-y'-z' \leq 0.4$.

In one aspect, in above formula 2 and/or formula 2-1, x and/or x', which means a mol% of nickel (Ni) based on a mol% of all transition metals, may be 0.5 or more, 0.6 or more, 0.7 or more, 0.8 or more, or 0.9 or more. In particular, x and/or x' may be a high nickel-based hydroxide which is 0.8 or more, or 0.9 or more.

In one aspect, in above formula 2 and/or formula 2-1, y and/or y', which means a mol% of cobalt (Co) based on a mol% of all transition metals, may be 0.4 or less, 0.3 or less, 0.2 or less, or 0.1 or less.

Meanwhile, the oxide precursor may be prepared by oxidizing the hydroxide precursor.

More specifically, the oxide precursor may be prepared by oxidizing the hydroxide precursor through heat treatment, and in this case, the temperature for heat treatment may be 300°C to 500°C.

In one aspect, the positive electrode active material precursor may have a unimodal form, and an average particle diameter (D50) of the positive electrode active material precursor particle may be 1 to 30 μm, more preferably 8 to 20 μm.

In addition, in another more preferred aspect, with regard to the positive electrode active material precursor of the present invention, a hydroxide particle and/or an oxide particle included in the positive electrode active material precursor may be a first particle having an average particle diameter (D50) of 8 μm or more, or 10 μm or more, and the positive electrode active material precursor may have a bimodal form further including a second particle having an average particle diameter (D50) of 7 μm or less, or 5 μm or less.

In the present specification, $D_{50}$ may be a particle diameter at 50% of an area cumulative distribution according to a particle diameter, which may be measured by using a laser diffraction method. Specifically, the powder to be measured may be dispersed in a dispersion medium, and then introduced into a commercially available laser diffraction particle size measuring device, so that a difference in diffraction pattern according to particle size may be measured to calculate a particle size distribution when particles pass through a laser beam.

In one aspect, if the positive electrode active material precursor has a bimodal form, w1/w2 may be 1.5 to 9.0, or 2.0 to 4.0 when a weight of the first particles included in the positive electrode active material precursor is wl and a weight of the second particles included in the positive electrode active material precursor is w2.

Then, the positive electrode active material of the present invention will be described.

The positive electrode active material according to one aspect of the present invention may be prepared from the above-described hydroxide precursor and/or oxide precursor.

In one aspect, the positive electrode active material may be prepared by mixing the hydroxide precursor with a lithium compound and heat-treating the resulting mixture.

In addition, the positive electrode active material may be prepared by mixing the oxide precursor with a lithium compound and heat-treating the resulting mixture.

Meanwhile, the positive electrode active material may include a plurality of lithium composite oxide particles.

In one aspect, the lithium composite oxide particle may include nickel (Ni).

In one aspect, the lithium composite oxide particle may further include any one or more selected from cobalt (Co), aluminum (Al), and manganese (Mn).

In one aspect, the lithium composite oxide particle may be represented by formula 3 below.

[Formula 3]  $Li_aNi_xCo_yM_{1-x-y}O_2$

In above formula 3, M may be selected from the group consisting of Zr, Mn, Al, B, Ba, Ce, Cr, F, Mg, V, Ti, Fe, Zn, Si, Y, Nb, Ga, Sn, Mo, W, P, Sr, and a combination thereof, and may be $0.9 \leq a \leq 1.2$, $0.5 \leq x \leq 1.0$, $0.0 \leq y \leq 0.4$, or $0.0 \leq 1-x-y \leq 0.4$.

In one aspect, the lithium composite oxide particle may be represented by formula 3-1 below.

[Formula 3-1] $Li_{a'}Ni_{x'}Co_{y'}M1_{z'}M2_{1-x'-y'-z'}O_2$

In above formula 3-1, M1 may be Al or Mn, M2 may be selected from the group consisting of Zr, B, Ba, Ce, Cr, F, Mg, V, Ti, Fe, Zn, Si, Y, Nb, Ga, Sn, Mo, W, P, Sr, and a combination thereof, and may be $0.9 \leq a' \leq 1.2$, $0.5 \leq x' \leq 1.0$, $0.0 \leq y' \leq 0.4$, $0.0 \leq z' \leq 0.4$, or $0.0 \leq 1-x'-y'-z' \leq 0.4$.

In one aspect, in above formula 3 and/or formula 3-1, a and/or a', which means a mol% of lithium (Li) based on a mol% of all transition metals excluding lithium (Li), may be 0.9 or more, 1.0 or more, 1.2 or less, 1.1 or less, or 1.05 or less.

In one aspect, in above formula 3 and/or formula 3-1, x and/or x', which means a mol% of nickel (Ni) based on a mol% of all transition metals excluding lithium (Li), may be 0.5 or more, 0.6 or more, 0.7 or more, 0.8 or more, or 0.9 or more. In particular, x and/or x' may be a high nickel-based oxide which is 0.8 or more, or 0.9 or more.

In one aspect, in above formula 3 and/or formula 3-1, y and/or y', which means a mol% of cobalt (Co) based on a mol% of all transition metals excluding lithium (Li), may be 0.4 or less, 0.3 or less, 0.2 or less, or 0.1 or less.

A crystal structure of the positive electrode active material particle according to one aspect of the present invention may be a hexagonal $\alpha$-NaFeO$_2$ (R-3m space group).

In one aspect, an average porosity A of the positive electrode active material particle included in the positive electrode active material may be $5\% \leq A \leq 7\%$ or $5\% \leq A \leq 6\%$.

In the present invention, the porosity may be defined as a "pore area/total particle sectional area."

The "total particle sectional area" may mean a sectional area passing through a center of a secondary particle, and may be measured including both a material region and a pore region.

The "pore area" may mean an area of the "pore" on a section passing through the center of the secondary particle.

The "pore" may mean a space between primary particles constituting the secondary particle or/and a space between crystallites, and may mean to include both an open pore and a closed pore.

Meanwhile, the inventors of the present invention have confirmed that an average porosity of the positive electrode active material particles included in the positive electrode active material may be controlled by controlling an FWHM$_{(102)}$ value of the hydroxide precursor.

In addition, the inventors of the present invention have confirmed that an average porosity of the positive electrode active material particles included in the positive electrode active material may be controlled by controlling a value of "XRD peak Integral breadth/4tan$\theta$" of the oxide precursor.

Furthermore, the inventors of the present invention have confirmed that when the hydroxide precursor satisfies above relational expression 1 and the oxide precursor prepared by oxidizing the same satisfies above relational expression 2, the lifespan properties of a battery are remarkably improved by controlling the average porosity of the positive electrode active material particles included in the positive electrode active material prepared from the oxide precursor thereof.

The positive electrode active material particle included in the positive electrode active material may be a secondary particle formed by aggregation of a plurality of primary particles.

In one aspect, the primary particle may include one or more crystallites.

The secondary particle may have a multiparticulate form or a polycrystal form including two or more primary particles.

In one more preferred aspect, the secondary particle may have a grain boundary density of 0.50 or more, 0.60 or more, 0.70 or more, 0.80 or more, 0.90 or more, or 0,95 or more, which is calculated by equation 1 below.

Grain boundary density = Number of grain boundaries between primary particles placed on the straight line / Number of primary particles placed on the straight line. [equation 1]

The "grain boundary density" may be calculated with respect to a primary particle and a grain boundary between primary particles placed on a straight line passing through a center of a secondary particle and crossing in a minor axis direction in a sectional image photographed by a scanning electron microscope (SEM) with respect to the particle.

To describe as one example, in the case of an unaggregated single particle consisting of a single primary particle, a grain boundary density calculated by above equation 1 may be 0. In addition, when two primary particles are aggregated, a grain boundary density calculated by above equation 1 may be 0.5.

In this case, the grain boundary density may mean an average value for 10 straight lines which are arbitrarily drawn.

In one aspect, the positive electrode active material may have a unimodal form, and an average particle diameter (D50) of the positive electrode active material particle may be 1 to 30 $\mu$m, more preferably 8 to 20 $\mu$m.

In addition, in another more preferred aspect, with regard to the positive electrode active material of the present invention, the positive electrode active material particle may be a first particle having an average particle diameter (D50) of 8 $\mu$m or more, or 10 $\mu$m or more, and the positive electrode active material may have a bimodal form further including a second particle having an average particle diameter (D50) of 7 μm or less, or 5 μm or less.

In one aspect, if the positive electrode active material has a bimodal form, wl/w2 may be 1.5 to 9.0, or 2.0 to 4.0 when a weight of the first particles included in the positive electrode active material is wl and a weight of the second particles included in the positive electrode active material is w2. With regard to a bimodal type positive electrode active material having such a mixing ratio, the present invention may solve the problem of deterioration in battery properties due to a change in an average particle diameter deviation of large particles and small particles, while increasing energy density by the small particles present in pores between the large particles.

In one aspect, when the positive electrode active material of the present invention has a bimodal form, the first particle, which is the large particle, may be a secondary particle formed by aggregation of primary particles.

In one aspect, the primary particle of the first particle, which is the large particle, may include one or more crystallites.

The secondary particle of the first particle, which is the large particle, may have a multiparticulate form or a polycrystal form including a plurality of primary particles.

In one aspect, the primary particle of the first particle, which is the large particle, may have a grain boundary density of 0.95 or more, which is calculated by above equation 1.

In one aspect, the second particle, which is the small particle, may have a single particle form including one primary particle, and when the primary particle consists of one crystallite, it may have a single crystal form.

In another aspect, the second particle, which is the small particle, may have a multiparticulate form or a polycrystal form including two or more primary particles.

In one aspect, the second particle, which is the small particle, may have a grain boundary density of 0.98 or less, 0.95 or less, 0.90 or less, 0.80 or less, 0.70 or less, 0.60 or less, or 0.50 or less, which is calculated by equation 1 below.

In one aspect, the positive electrode active material particle included in the positive electrode active material may include a coating oxide occupying at least a portion of at least one of a surface of a secondary particle or a grain boundary between primary particles and a surface of the primary particle.

In one aspect, the coating oxide may be represented by formula 4 below.

$$[\text{Formula 4}] \qquad Li_pM3_qO_r$$

In above formula 4, M3 may be at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd, and Nd, and may be $0 \leq p \leq 10$, $0 < q \leq 8$, and $2 \leq r \leq 13$.

As one example, in above formula 4, M3 may refer to a coating element, and the coating oxide may be a composite oxide of lithium and an element represented by M3, or an oxide of M3.

As one example, the coating oxide may be $Li_pCo_qO_r$, $Li_pW_qO_r$, $Li_pZr_qO_r$, $Li_pTi_qO_r$, $Li_pNi_qO_r$, $Li_pAl_qO_r$, $Li_pMo_qO_r$, $Co_qO_r$, $Al_qO_r$, $W_qO_r$, $Zr_qO_r$, $Ti_qO_r$, $B_qO_r$, $Li_p(W/Ti)_qO_r$, $Li_p(W/Zr)_qO_r$, $Li_p(W/Ti/Zr)_qO_r$, $Li_p(W/Ti/B)_qO_r$, but is not limited thereto.

The coating oxide may include a concentration gradient portion in which a molar concentration of an element contained in the coating oxide varies. As one example, when the coating oxide includes lithium, a molar concentration of lithium may vary. In addition, as one example, at least one molar concentration of M3 included in the coating oxide may vary.

In one aspect, when the coating oxide occupies at least a portion of a surface region of the primary particle forming an outermost portion of the secondary particle, the concentration gradient portion may decrease, increase, or increase and then decrease in a direction from the surface of the primary particle forming the outermost portion of the secondary particle toward the center of the secondary particle.

In addition, the concentration gradient portion may decrease, increase, or increase and then decrease in a direction from the surface of the primary particle forming the outermost portion of the secondary particle toward the center of the primary particle.

In one aspect, when the coating oxide occupies at least a portion of the surface region of the primary particle that does not form the outermost portion of the secondary particle, the concentration gradient portion may decrease, increase, or increase and then decrease in a direction from the surface of the primary particle toward the center of the primary particle.

The coating oxide according to one aspect of the present invention may improve the output properties of the battery due to high ion conductivity and may further improve the lifespan of the battery by protecting the surface of the lithium composite oxide. In addition, residual lithium present on the surface of the lithium composite oxide may be effectively reduced, and side reactions due to unreacted residual lithium may be prevented.

A method for preparing a positive electrode active material precursor and a positive electrode active material according to one aspect of the present invention is not limited to a preparation method thereof as long as it has the above technical features, but may be prepared as follows as one more preferred aspect.

First, a hydroxide precursor may be prepared.

Then, the prepared hydroxide precursor may be heat-treated to prepare an oxide precursor.

After that, the prepared oxide precursor may be mixed with a lithium compound and heat-treated to prepare a positive electrode active material.

Meanwhile, the technical feature of the positive electrode active material precursor described above may relate to an average technical feature of a plurality of positive electrode active material precursor particles included in the positive electrode active precursor.

In addition, the technical feature of the positive electrode active material described above may relate to an average technical feature of a plurality of positive electrode active material particles included in the positive electrode active material.

In the meantime, the meaning of "≤", "or more" or "or less" described in the present invention may be replaced with the meaning of "<", "more than" or "less than."

A positive electrode according to one aspect of the present invention may include the positive electrode active material described above.

The positive electrode may have a known structure and may be prepared according to a known preparation method except for using the positive electrode active material described above. A binder, a conductive material, and a solvent are not particularly limited as long as they may be used on the positive electrode current collector of the secondary battery.

A secondary battery according to one aspect of the present invention may include the positive electrode active material described above.

The secondary battery may specifically include a positive electrode, a negative electrode positioned opposite to the positive electrode, and an electrolyte between the positive electrode and the negative electrode, but is not particularly limited as long as it may be used as a secondary battery.

Hereinafter, the exemplary embodiments of the present invention will be described in more detail.

## <Example 1>

### (a) Preparation of hydroxide precursor

A seed of a hydroxide large particle precursor and a hydroxide small particle precursor, designed to have an atomic ratio of Ni:Co:Al=95:4:1 (at%), were synthesized, respectively, through a co-precipitation method using nickel sulfate, cobalt sulfate and aluminum sulfate.

During the synthesis of the seed of the hydroxide large particle precursor, the resulting mixture was stirred at 400 rpm, and then stirred at 600 rpm after being transferred to another reactor.

### (b) Preparation of oxide precursor

The prepared hydroxide large particle precursor and hydroxide small particle precursor were heated by 2°C per minute, calcined at 400°C for six hours, and oxidized to be converted into an oxide precursor, respectively.

An average particle diameter (D50) of the converted oxide large particle precursor was 15.0 $\mu$m, and an average particle diameter (D50) of the prepared oxide small particle precursor was 3.0 $\mu$m.

### (c) Preparation of positive electrode active material

The prepared oxide large particle precursor and the oxide small particle precursor were weighed to have a weight ratio of 70:30, LiOH (Li/(Ni+Co+Al) mol ratio=1.05) was added thereto and mixed, and then the resulting mixture was heated by 2°C per minute and heat-treated up to 800°C for 12 hours in a firing furnace while maintaining an $O_2$ atmosphere.

Distilled water was added to the lithium composite oxide prepared through the heat treatment above, and NaOH was added in an amount of 1.5 wt% based on the lithium composite oxide. Then, a 5.0 wt% of cobalt sulfate aqueous solution was added so that the cobalt contained in the cobalt sulfate aqueous solution was 3.0 mol% based on a metal element (Ni+Co+Al) excluding lithium in the lithium composite oxide while being stirred, thereby coating the surface of the lithium composite oxide particle. After completion of the reaction, the reaction mixture was dried at 120°C for 12 hours.

The dried product was heated by 2°C per minute up to 700°C while maintaining an $O_2$ atmosphere in a firing furnace, and heat-treated at 700°C for 12 hours to obtain a bimodal-type positive electrode active material.

## <Comparative Example 1>

A positive electrode active material was obtained in the same manner as in Example 1, except that the resulting mixture was stirred at 600 rpm in a single reactor without being transferred to another reactor upon the synthesis of the seed of the hydroxide large particle precursor in step (a) of above Example 1.

**<Comparative Example 2>**

A positive electrode active material was obtained in the same manner as in Example 1, except that the resulting mixture was stirred at 400 rpm in a single reactor without being transferred to another reactor upon the synthesis of the seed of the hydroxide large particle precursor in step (a) of above Example 1.

**Preparation of lithium secondary battery**

A positive electrode slurry was prepared by dispersing 92 wt% of the positive electrode active materials prepared according to above Example and Comparative Examples, 4 wt% of artificial graphite, and 4 wt% of a PVDF binder in 30 g of N-methyl-2-pyrrolidone (NMP). The positive electrode slurry was uniformly applied to an aluminum thin film having a thickness of 15 μm and vacuum-dried at 135°C to prepare a positive electrode for a lithium secondary battery.

A coin battery was manufactured by using a lithium foil as a counter electrode with respect to the positive electrode, a porous polyethylene film (Celgard 2300, thickness: 25 μm) as a separator, and an electrolyte solution in which LiPF6 was present at a concentration of 1.15 M in a solvent in which ethylene carbonate and ethyl methyl carbonate were mixed at a volume ratio of 3:7.

**<Experimental Example 1>**

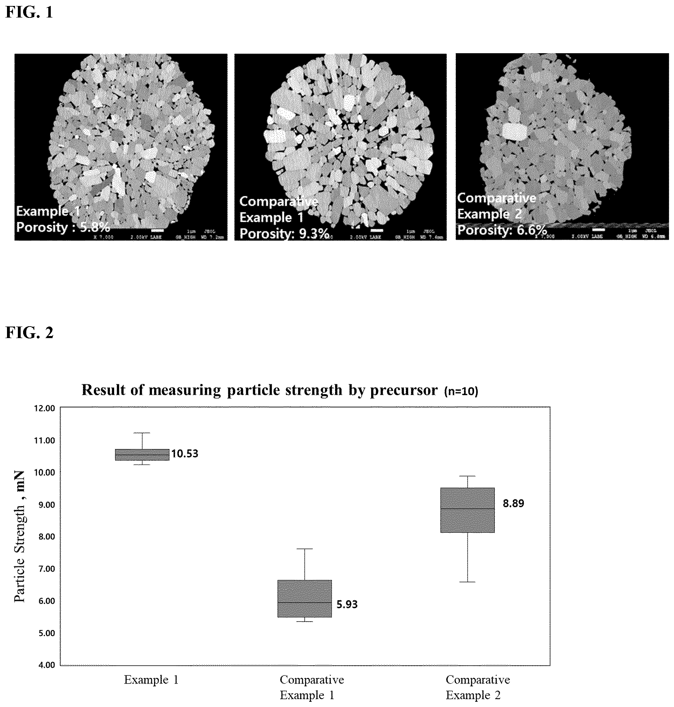

The positive electrode active materials according to above Example and Comparative Examples were subjected to a cross-section polisher at a current of 380 μA for one hour and 30 minutes to obtain a section. With regard to FE-SEM, a sectional SEM image of the positive electrode active material particle was obtained at a voltage of 2 kV using JSM-7610FPlus (JEOL), and the result is shown in FIG. 1.

**<Experimental Example 2>**

An $FWHM_{(102)}$ value (X) was measured for the hydroxide precursors according to above Example and Comparative Examples. The measurement method thereof has been described above.

In addition, XRD peak broadening/$4\tan\theta$ values (Y) were calculated for the oxide precursors according to above Example and Comparative Examples. The measurement method thereof has been described above.

In addition, an average porosity was calculated for the positive electrode active materials according to above Example and Comparative Examples. The porosity was calculated by taking a sectional SEM image obtained after sectional treatment to pass through the center of the particle using the FIB (Ga-ion source), and then measuring an area of a dark portion representing the porosity from the SEM image.

The results thereof are shown in table 1 below.

<Table 1>

|  | **X** | **Y** | Porosity (%) |
| --- | --- | --- | --- |
|  | Hydroxide precursor | Oxide precursor | Positive electrode active material |
| Example 1 | **1.02** | **132** | **5.8** |
| Comparative Example 1 | **1.42** | **147** | **9.3** |
| Comparative Example 2 | **1.35** | **140** | **6.6** |

**<Experimental Example 3>**

The results of battery properties measured for the lithium secondary batteries according to above Example and Comparative Examples are shown in table 2 below.

With regard to measurement of a charge/discharge capacity, an initial charge capacity and an initial discharge capacity were measured through a charge/discharge experiment using an electrochemical analysis device (Toyo, Toscat-3100) to which 25°C, a voltage range of 3.0 V to 4.25 V, and a discharge rate of 0.2 C were applied, and efficiency was calculated.

A lifespan was measured by performing charge/discharge 50 times under the condition of 45°C and 1C/1C within a driving voltage range of 3.0 V to 4.3 V for the same lithium secondary battery and then measuring a ratio of a discharge capacity at a 50th cycle to an initial discharge capacity (cycle capacity retention rate).

For DC-IR analysis, a battery charged and discharged at 45°C was charged based on 100% of SOC to measure resistance. Then, after charging/discharging was performed 50 times in the same manner as the lifespan was measured, resistance was measured under the same conditions for measurement.

For CCCV analysis, a time in which the battery was charged from 1 C to a maximum driving voltage of -0.05 V by a constant current (CC) method at 45°C was measured as a CC charging time, and then a time in which the battery was fully charged by a constant voltage (CV) method until the maximum driving voltage was reached was measured as a CV charging time. Then, after charging/discharging was performed 50 times in the same manner as the lifespan was measured, a charging time was measured under the same conditions for measurement.

In this case, a CCCV value was (CC charging time)/(CC charging time+CV charging time)* 100 (%).

<Table 2>

| | Charge capacity | Discharge capacity | Efficiency | Life time | CCCV | | DCIR | |
|---|---|---|---|---|---|---|---|---|
| | | | | | Before lifespan | After lifespan | Before lifespan | After lifespan |
| Unit | mAh/g | mAh/g | % | % | % | | Ω | |
| Example 1 | 237.8 | 209.7 | 88.2% | 83.9% | 92.4% | 68.8% | 7.0 | 18.0 |
| Comparative Example 1 | 238.1 | 209.2 | 87.9% | 78.7% | 90.4% | 59.4% | 8.9 | 18.7 |
| Comparative Example 2 | 237.9 | 209.8 | 88.2% | 81.8% | 89.8% | 63.9% | 8.0 | 18.3 |

According to above table 2, it can be confirmed that the lifespan properties are remarkably improved in Example 1 compared to Comparative Examples 1 and 2. It may be understood that the porosity of the positive electrode active material is controlled by controlling the FWHM (102) value (X) of the hydroxide precursor and controlling the XRD peak Integral breadth/4tanθ value (Y) of the oxide precursor, thereby improving the lifespan properties of the lithium secondary battery.

**<Experimental Example 4>**

The results of measuring the particle intensity of the oxide precursors according to above Example and Comparative Examples are shown in FIG. 2.

The particle strength was measured by dropping the oxide precursor particles on a glass plate through a particle strength measuring device, and applying pressure slowly through the measuring device to measure a force at a point where the particles were broken.

According to FIG. 2, it can be confirmed that the particle strength is remarkably improved in Example 1 compared to Comparative Examples 1 and 2. It may be understood that the stability of a crystal structure is secured by controlling the FWHM (102) value (X) of the hydroxide precursor and controlling the XRD peak Integral breadth/4tanθ value (Y) of the oxide precursor, thereby improving the particle strength.

**<Experimental Example 5>**

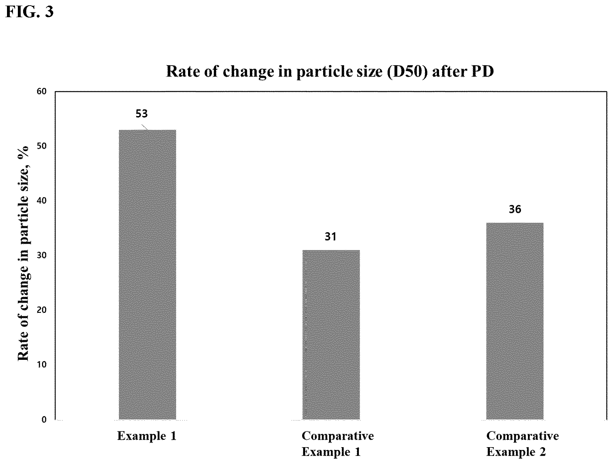

The results of measuring a rate of change in particle size (D50) of the oxide precursors after pressurization according to above Example and Comparative Examples are shown in FIG. 3.

The rate of change in particle size was measured as follows.

$$\text{Change rate in particle size} = (P0-P1)/P0*100(\%)$$

In above expression, P0 may be D50 of the oxide precursor particle, and said P1 may be D50 measured after pressurizing the oxide precursor particle at 8.5 tons for 30 seconds.

According to FIG. 3, it can be confirmed that the rate of change in particle size (D50) after pressurization is large in Example 1 compared to Comparative Examples 1 and 2. It may be understood that the stability of a crystal structure is secured by controlling the FWHM (102) value (X) of the hydroxide precursor and controlling the XRD peak Integral breadth/4tanθ value (Y) of the oxide precursor, and the rate of change in particle size (D50) after pressurization increases as the oxide precursor is broken without being shrunk into an empty space at pressure of limit strength or more.

**Claims**

1. A positive electrode active material precursor comprising a plurality of hydroxide particles, wherein the positive electrode active material precursor satisfies relational expression 1 below in an XRD pattern obtained through Rietveld fitting as a result of X-ray diffraction (XRD) analysis using a CuKα ray:

$$[\text{Relational Expression 1}] \; 0.82 \leq \text{FWHM}_{(102)} \leq 1.22,$$

wherein, in above relational expression 1, said $\text{FWHM}_{(102)}$ means a full width at half maximum (FWHM(deg., $2\theta$)) of a (102) plane at an XRD peak defined by a hexagonal lattice having a R-3m space group.

2. A positive electrode active material precursor comprising a plurality of oxide particles, wherein the positive electrode active material precursor satisfies relational expression 2 below in an XRD pattern obtained through Rietveld fitting as a result of X-ray diffraction (XRD) analysis using a CuKα ray:

$$[\text{Relational Expression 2}]$$

$$127 \leq \text{XRD peak Integral breadth}/4\tan\theta \leq 137,$$

wherein, in above relational expression 2, XRD peak Integral breadth is a value obtained by dividing an "area of the XRD peak" by a "height of the XRD peak," and $\theta$ is a Bragg angle of the corresponding peak.

3. The positive electrode active material precursor of claim 1 or 2, wherein the particle is a first particle having an average particle diameter (D50) of 8 μm or more, and
the positive electrode active material further comprises a second particle having an average particle diameter (D50) of 7 μm or less.

4. A positive electrode active material prepared from a positive electrode active material precursor of claim 1 or 2.

5. The positive electrode active material of claim 4, wherein an average porosity A of the positive electrode active material particle included in the positive electrode active material is 5% ≤ A ≤ 7%.

6. The positive electrode active material of claim 4, wherein the positive electrode active material particle included in the positive electrode active material is a first particle having an average particle diameter (D50) of 8 μm or more, and
the positive electrode active material further comprises a second particle having an average particle diameter (D50) of 7 μm or less.

7. The positive electrode active material of claim 4, wherein the positive electrode active material particle included in the positive electrode active material comprises a coating oxide occupying at least a portion of at least one of a surface of a secondary particle or a grain boundary between primary particles and a surface of the primary particle.

8. A positive electrode comprising a positive electrode active material of claim 4.

9. A secondary battery comprising a positive electrode active material of claim 4.

**FIG. 1**

**FIG. 2**

Result of measuring particle strength by precursor (n=10)

FIG. 3

**Rate of change in particle size (D50) after PD**

Europäisches
Patentamt

European
Patent Office

Office européen
des brevets

# EUROPEAN SEARCH REPORT

**Application Number**

EP 24 20 8137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 824 735 A2 (SAMSUNG SDI CO LTD [KR]) 14 January 2015 (2015-01-14) * paragraphs [0037], [0060] - [6588], [0155]; claims * | 1-9 | INV. C01G53/04 C01G53/42 H01M4/505 H01M4/525 |
| X | CN 112 751 021 A (ECOPRO BM CO LTD) 4 May 2021 (2021-05-04) * claims * | 1,3,4,6, 8,9 | |
| X | CN 115 140 783 A (SUQIAN XIANGYING NEW ENERGY TECH CO LTD) 4 October 2022 (2022-10-04) * claims * | 1,4,8,9 | |
| A | KR 102 301 642 B1 (POSCO [KR]; POSCO CHEMICAL [KR]; RES INST IND SCIENCE & TECH [KR]) 10 September 2021 (2021-09-10) * paragraph [0077]; claims * | 1-9 | |
| A | US 2013/202966 A1 (YU JONG-RYEOL [KR] ET AL) 8 August 2013 (2013-08-08) * paragraph [0058] * | 1-9 | **TECHNICAL FIELDS SEARCHED (IPC)** C01G H01M |

The present search report has been drawn up for all claims

| Place of search | Date of completion of the search | Examiner |
|---|---|---|
| Munich | 5 March 2025 | Nobis, Barbara |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8137

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | | Publication date | Patent family member(s) | | Publication date |
|---|---|---|---|---|---|
| EP 2824735 | A2 | 14-01-2015 | CN | 104282903 A | 14-01-2015 |
| | | | EP | 2824735 A2 | 14-01-2015 |
| | | | JP | 6508806 B2 | 08-05-2019 |
| | | | JP | 2015018803 A | 29-01-2015 |
| | | | KR | 20150006283 A | 16-01-2015 |
| | | | US | 2015010819 A1 | 08-01-2015 |
| CN 112751021 | A | 04-05-2021 | CN | 112751021 A | 04-05-2021 |
| | | | CN | 118970029 A | 15-11-2024 |
| | | | CN | 118970030 A | 15-11-2024 |
| | | | EP | 3816112 A1 | 05-05-2021 |
| | | | JP | 7267248 B2 | 01-05-2023 |
| | | | JP | 2021070626 A | 06-05-2021 |
| | | | JP | 2023100694 A | 19-07-2023 |
| | | | KR | 20210051806 A | 10-05-2021 |
| | | | US | 2021135216 A1 | 06-05-2021 |
| | | | US | 2023197952 A1 | 22-06-2023 |
| | | | US | 2024266532 A1 | 08-08-2024 |
| CN 115140783 | A | 04-10-2022 | NONE | | |
| KR 102301642 | B1 | 10-09-2021 | CN | 114556633 A | 27-05-2022 |
| | | | EP | 4020630 A1 | 29-06-2022 |
| | | | JP | 7416913 B2 | 17-01-2024 |
| | | | JP | 2022546323 A | 04-11-2022 |
| | | | KR | 20210023145 A | 04-03-2021 |
| | | | US | 2022388852 A1 | 08-12-2022 |
| | | | WO | 2021034020 A1 | 25-02-2021 |
| US 2013202966 | A1 | 08-08-2013 | CN | 102714311 A | 03-10-2012 |
| | | | JP | 5687713 B2 | 18-03-2015 |
| | | | JP | 2013517599 A | 16-05-2013 |
| | | | KR | 20110083383 A | 20-07-2011 |
| | | | US | 2013202966 A1 | 08-08-2013 |
| | | | WO | 2011087309 A2 | 21-07-2011 |

EPO FORM P0459

For more details about this annex : see Official Journal of the European Patent Office, No. 12/82